# FASCICULE DE BREVET EUROPEEN

(11) **EP 3 319 815 B1**
(45) Date de publication et mention de la délivrance du brevet: **04.09.2019**
(21) Numéro de dépôt: 16734693.1
(22) Date de dépôt: 06.07.2016
(51) Int. Cl.: B60C 9/20, B60C 9/18, B60C 1/00

(54) **PNEUMATIQUE COMPORTANT DES MELANGES ELASTOMERIQUES A BAS TAUX DE SOUFRE**
REIFEN MIT ELASTOMERMISCHUNGEN MIT NIEDRIGEM SCHWEFELGEHALT
TYRE COMPRISING ELASTOMERIC MIXTURES WITH A LOW LEVEL OF SULFUR

(30) Priorité: 10.07.2015 FR 1556553
(43) Date de publication de la demande: 16.05.2018
(73) Titulaire: Compagnie Générale des Etablissements Michelin, 63000 Clermont-Ferrand (FR)
(72) Inventeur: BABAUD, Jacques, 63040 Clermont-Ferrand Cedex 9 (FR); FOURNIER, Orel, 63040 Clermont-Ferrand Cedex 9 (FR); VASSEUR, Didier, 63040 Clermont-Ferrand Cedex 9 (FR); NAYRAT, Delphine, 63040 Clermont-Ferrand Cedex 9 (FR)
(74) Mandataire: Le Cam, Stéphane Georges Elie
(86) Numéro de dépôt international: PCT/EP2016/065903
(87) Numéro de publication internationale: WO 2017/009120

(56) Documents cités:
- EP-A1- 0 943 656
- EP-A1- 1 231 079
- FR-A1- 2 728 510
- US-A- 4 273 177

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à» signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis de l'axe de rotation du pneumatique est inférieure à, respectivement supérieure à ».

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier des mélanges élastomériques est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités des couches sommet de travail, qui ont pour conséquence l'apparition et la propagation de fissures de la gomme au niveau desdites extrémités.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

La demande française WO 99/24269 propose encore, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

La demande de brevet EP 1 231 079 A1 décrit un pneumatique dont la bande de roulement est constituée d'un mélange élastomérique ne comportant pas de soufre.

La demande de brevet EP 0 943 656 A1 décrit des exemples de mélanges ne comportant pas de soufre pour constituer une partie d'un pneumatique.

Les inventeurs se sont toutefois donnés pour mission d'améliorer encore les propriétés d'endurance du pneumatique notamment lorsque l'usage de celui-ci conduit notamment à des montées en température pénalisantes pour les mélanges élastomériques constitutifs du pneumatique notamment dans les zones d'extrémités des couches de travail.

Ce but a été atteint selon l'invention par un pneumatique à armature de carcasse radiale, constituée d'au moins une couche d'éléments de renforcement, ledit pneumatique comprenant une armature de sommet comportant au moins deux couches de sommet de travail d'éléments de renforcement, elle-même coiffée radialement d'une bande de roulement, ladite bande de roulement étant réunie à deux bourrelets par l'intermédiaire de deux flancs, la densité relative de ponts de soufre mesurée selon la méthode de gonflement à l'équilibre étant inférieure à 5 % dans au moins 30 % des mélanges élastomériques présents dans la surface d'au moins une zone S dans un plan méridien, ladite au moins une zone S étant définie dans un plan méridien par la spline cubique continue en courbure passant par quatre points tels que :
- un premier point B, défini par la projection orthogonale sur un élément de renforcement de l'armature de carcasse du point A formant l'extrémité d'un élément de renforcement de la couche de sommet de travail axialement la plus large,
- un deuxième point D, tel que le segment AD soit égale à 1/3 du segment AC, le point C étant l'intersection de la surface extérieure de la bande de roulement et de la droite passant par les points A et B, D étant portée par la droite passant par les points A, B et C,
- un troisième point E défini sur un élément de renforcement de la couche de sommet de travail axialement la plus large tel que la longueur du segment AE soit égale à 10% de la largeur axiale maximale du pneumatique et,
- un quatrième point F, axialement extérieur au point A, tel que le segment AF soit perpendiculaire à la droite passant par les points A, B, C et D et dont la longueur est égale à la moitié de celle du segment AE, et
lesdits mélanges élastomériques présents dans la surface de ladite au moins une zone S dans un plan méridien étant des compositions à base d'au moins un élastomère diénique choisi dans le groupe des élastomères diéniques constitué par les polybutadiènes (en abrégé "BR"), les polyisoprènes (IR) de synthèse, le caoutchouc naturel (NR), les copolymères d'isoprène, les copolymères de butadiène à l'exception des copolymères butadiène-nitrile (NBR), à l'exclusion des élastomères diéniques portant des fonctions carboxyles et les mélanges de ces élastomères diéniques.

Au sens de l'invention, l'élastomère diénique de la composition conforme à l'invention est choisi dans le groupe des élastomères diéniques constitué par les polybutadiènes (en abrégé "BR"), les polyisoprènes (IR) de synthèse, le caoutchouc naturel (NR), les copolymères d'isoprène, copolymères de butadiène à l'exception des copolymères butadiène-nitrile (NBR), et les mélanges de ces élastomères. De tels copolymères sont préférentiellement choisis dans le groupe constitué par les copolymères de butadiène-styrène (SBR), les copolymères d'isoprène-butadiène (BIR), les copolymères d'isoprène- styrène (SIR) et les copolymères d'isoprène-butadiène-styrène (SBIR). On entend par élastomères diéniques des élastomères diéniques modifiés ou non. S'ils sont modifiés, ils peuvent être couplés et/ou étoilés ou encore fonctionnalisés, en extrémité de chaîne ou le long de la chaîne à l'exception des élastomères portant des fonctions carboxyles.

Au sens de l'invention, la densité relative de ponts de soufre est la densité de ponts de soufre mesurée selon la méthode de gonflement à l'équilibre rapportée à la densité globale de ponts de réticulation mesurée selon la méthode de gonflement à l'équilibre.

La largeur axiale maximale du pneumatique est mesurée sur le pneumatique lorsque ce dernier est monté sur sa jante de service et gonflé à sa pression nominale.

Selon un mode de réalisation préféré de l'invention, la densité relative de ponts de soufre mesurée selon la méthode de gonflement à l'équilibre est inférieure à 5 % dans au moins 50 % des mélanges élastomériques présents dans la surface de ladite au moins une zone S dans un plan méridien.

Avantageusement selon l'invention, le point A formant l'extrémité d'un élément de renforcement de la couche de sommet de travail axialement la plus large dans un plan méridien est au contact ou inclus dans lesdits au moins 30 % des mélanges élastomériques présents dans la surface de ladite au moins une zone S.

Avantageusement encore selon l'invention, les extrémités de chacune des couches de sommet de travail dans un plan méridien sont au contact ou incluses dans lesdits au moins 30 % des mélanges élastomériques présents dans la surface de ladite au moins une zone S.

Selon une variante avantageuse de l'invention, la densité relative de ponts ioniques mesurée selon la méthode de gonflement à l'équilibre est supérieure à 50 % dans lesdits au moins 30 % des mélanges élastomériques présents dans la surface de ladite au moins une zone S dans un plan méridien et de préférence dans lesdits au moins 50 % des mélanges élastomériques présents dans la surface de ladite au moins une zone S dans un plan méridien.

Au sens de l'invention, la densité relative de ponts ioniques est la densité de ponts ioniques mesurée selon la méthode de gonflement à l'équilibre rapportée à la densité globale de ponts de réticulation mesurée selon la méthode de gonflement à l'équilibre.

De préférence encore, la densité relative de ponts ioniques mesurée selon la méthode de gonflement à l'équilibre est supérieure à 60 % dans lesdits au moins 30 % des mélanges élastomériques présents dans la surface de ladite au moins une zone S dans un plan méridien et de préférence dans lesdits au moins 50 % des mélanges élastomériques présents dans la surface de ladite au moins une zone S dans un plan méridien.

Plus préférentiellement encore, la densité relative de ponts ioniques mesurée selon la méthode de gonflement à l'équilibre est supérieure à 70 % dans lesdits au moins 30 % des mélanges élastomériques présents dans la surface de ladite au moins une zone S dans un plan méridien et de préférence dans lesdits au moins 50 % des mélanges élastomériques présents dans la surface de ladite au moins une zone S dans un plan méridien.

Avantageusement encore selon l'invention, la densité relative de ponts carbone-carbone mesurée selon la méthode de gonflement à l'équilibre est inférieure à 45 % dans lesdits au moins 30 % des mélanges élastomériques présents dans la surface de ladite au moins une zone S dans un plan méridien et de préférence dans lesdits au moins 50 % des mélanges élastomériques présents dans la surface de ladite au moins une zone S dans un plan méridien.

Au sens de l'invention, la densité relative de ponts carbone-carbone est la densité de ponts carbone-carbone mesurée selon la méthode de gonflement à l'équilibre rapportée à la densité globale de ponts de réticulation mesurée selon la méthode de gonflement à l'équilibre.

De préférence encore, la densité relative de ponts carbone-carbone mesurée selon la méthode de gonflement à l'équilibre est inférieure à 35 % dans lesdits au moins 30 % des mélanges élastomériques présents dans la surface de ladite au moins une zone S dans un plan méridien et de préférence dans lesdits au moins 50 % des mélanges élastomériques présents dans la surface de ladite au moins une zone S dans un plan méridien.

Plus préférentiellement encore, la densité relative de ponts carbone-carbone mesurée selon la méthode de gonflement à l'équilibre est inférieure à 25 % dans lesdits au moins 30 % des mélanges élastomériques présents dans la surface de ladite au moins une zone S dans un plan méridien et de préférence dans lesdits au moins 50 % des mélanges élastomériques présents dans la surface de ladite au moins une zone S dans un plan méridien.

Selon l'invention, les mesures de densités de réticulation sont effectuées à partir de la méthode de gonflement à l'équilibre. Pour mesurer la densité de réticulation on réalise un gonflement des mélanges, préparés sous forme d'échantillons, dans du toluène pendant 72 heures. On mesure le poids des échantillons immédiatement après avoir évacué l'excès de solvant au moyen d'un papier buvard. Le gonflement des échantillons et l'absorption de solvant est inversement proportionnel à la présence et donc à la densité de ponts de réticulation.

Les échantillons sont ensuite séchés sous vide jusqu'à atteindre un poids constant. De la différence entre les deux valeurs de poids mesurées, on en déduit la densité globale de ponts de réticulation.

On utilise de l'isopropyl mercaptan pour attaquer sélectivement les ponts polysulfurés et de l'hexanethiol pour casser sans distinction les ponts polysulfures et disulfures. Les échantillons sont traités pendant 2 heures avec l'isopropyl mercaptan et 48 heures avec l'hexanethiol à 25°C.

Après chacun de ces traitements, une mesure de densité de ponts de réticulation est calculée à partir des mesures de poids sur les échantillons après gonflement, telle que décrit précédemment.

Il est ainsi possible de déterminer le pourcentage de ponts de soufre des échantillons au regard de la densité globale de ponts de réticulation. Cette mesure de ponts de soufre est notamment décrite dans l'ouvrage « RUBBER CHEMISTRY AND TECHNOLOGY, Vol. 87, No. 1, pp. 21-30 (2014) ».

Afin de déterminer le pourcentage de ponts ioniques, les mêmes échantillons subissent une attaque chimique par un traitement dans le toluène en présence d'acide chloroacétique pendant 120 heures. Un tel traitement est décrit dans l'ouvrage « POLYMER COMPOSITES - 2011 1513 ».

Les échantillons ainsi traités, on effectue à nouveau des mesures de la densité de ponts de réticulation par un gonflement des mélanges dans du toluène pendant 72 heures. On mesure comme précédemment le poids des échantillons immédiatement après avoir évacué l'excès de solvant au moyen d'un papier buvard puis après séchage jusqu'à un poids constant. Les ponts Carbone-Carbone constitue le réseau résiduel non attaqué.

On en déduit par ailleurs le pourcentage de ponts ioniques par différence des valeurs obtenues précédemment.

Les essais réalisés avec des pneumatiques ainsi réalisés conformément à l'invention ont montré que les pneumatiques présentent des performances en termes d'endurance améliorées notamment lors de roulage conduisant à des montées en température importantes des mélanges élastomériques présents dans les zones d'extrémités des couches de travail.

Les inventeurs pensent avoir su mettre en évidence que la densité relative de ponts de soufre inférieure à 5 % dans au moins une partie de la zone S, telle que définie selon l'invention permet de diminuer la sensibilité des pneumatiques aux effets de vieillissement notamment dus aux élévations de température. En effet, les inventeurs pensent interpréter ces résultats par des choix de mélanges élastomériques dans des zones précisément définies qui confèrent une meilleure résistance au vieillissement notamment dû aux élévations de température.

Selon un mode de réalisation avantageux de l'invention, un mélange élastomérique présentant une densité relative de ponts de soufre mesurée selon la méthode de gonflement à l'équilibre inférieure à 5 % est une composition à base d'au moins un élastomère diénique, un dérivé du diacrylate de zinc sous la forme d'un sel de zinc de formule (I) 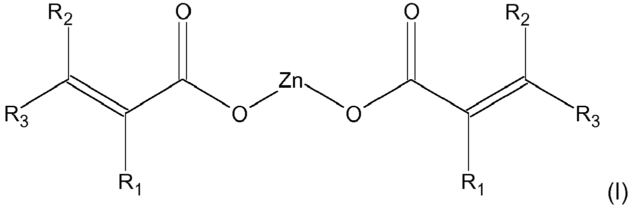 dans laquelle R1, R2 et R3 représentent indépendamment un atome d'hydrogène ou un groupe hydrocarboné en C1-C7 choisi parmi les groupes alkyles linéaires, ramifiés ou cycliques, les groupes aralkyles, les groupes alkylaryles et les groupes aryles, et éventuellement interrompus par un ou plusieurs hétéroatomes, R2 et R3 pouvant former ensemble un cycle non aromatique, ladite composition comprenant en outre un peroxyde, les taux de dérivé de diacrylate de zinc et de peroxyde étant tels que le rapport du taux de peroxyde et du taux de dérivé de diacrylate de zinc est inférieur ou égal à 0,09.

Avantageusement encore, ladite composition ne comprend pas de charge renforçante ou en comprend moins de 65 pce, le rapport du taux de charge et du taux de dérivé de diacrylate de zinc étant inférieur ou égal à 4.

Les inventeurs ont encore mis en évidence que les pneumatiques réalisés conformément à ces modes de réalisations avantageux de l'invention, selon lesquels le taux de charge renforçante est réduit en comparaison de réalisations plus usuelles pour les mélanges élastomériques concernés, présentent des performances en termes de résistance au roulement améliorées. En effet, la présence de mélanges élastomériques comportant un faible taux de charge conduit à des valeurs d'hystérèse réduite en comparaison de celles de mélanges plus usuels.

Préférentiellement, l'invention est relative à une composition telle que définie ci-dessus dans laquelle R1, R2 et R3 représentent indépendamment un atome d'hydrogène ou un groupe méthyle. Plus préférentiellement, R2 et R3 représentent chacun un atome d'hydrogène. Plus préférentiellement également, R1 représente un groupe méthyle.

De préférence, l'invention est relative à une composition telle que définie ci-dessus dans laquelle la quantité de dérivé du diacrylate de zinc dans la composition est comprise dans un domaine allant de 5 à 40 pce (parties en poids pour cent parties en poids d'élastomère), de préférence de 7 à 35 pce.

Préférentiellement, l'invention est relative à une composition telle que définie ci-dessus dans laquelle le peroxyde est un peroxyde organique, préférentiellement présent dans une quantité inférieure ou égale à 3 pce. Plus préférentiellement, la quantité de peroxyde dans la composition est comprise dans un domaine allant de 0,1 à 3 pce ; plus préférentiellement de 0,2 à 2,5 pce, et plus préférentiellement encore de 0,25 à 1,8 pce.

De manière préférentielle, l'invention est relative à une composition telle que définie ci-dessus dans laquelle le rapport du taux de peroxyde et du taux de dérivé de diacrylate de zinc est compris entre 0,01 et 0,09 ; de préférence entre 0,03 et 0,09 et plus préférentiellement entre 0,05 et 0,08.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

De manière préférentielle, l'invention est relative à une composition telle que définie ci-dessus dans laquelle le taux de charge renforçante est compris dans un domaine allant de 5 à 60 pce ; plus préférentiellement de 10 à 50 pce, mieux, de 20 à 40 pce.

De préférence, l'invention est relative à une composition telle que définie ci-dessus dans laquelle la charge renforçante est du noir de carbone, de la silice ou un mélange de ces derniers. Préférentiellement, la charge renforçante est majoritairement constituée de noir de carbone.

Préférentiellement, l'invention est relative à une composition telle que définie ci-dessus dans laquelle le rapport du taux de charge et du taux de dérivé de diacrylate de zinc est compris dans un domaine allant de 0,15 à 3 ; de préférence de 1,5 à 3 ; alternativement et préférentiellement également de 0,7 à 1,3.

De préférence, l'invention est relative à une composition telle que définie ci-dessus ne contenant pas de soufre moléculaire ou d'agent donneur de soufre en tant qu'agent de vulcanisation ou en contient moins de 0,5 pce. Préférentiellement, la composition ne contient pas de soufre moléculaire ou d'agent donneur de soufre en tant qu'agent de vulcanisation ou en contient moins de 0,3 pce et de préférence moins de 0,1 pce. Préférentiellement, la composition ne contient pas d'accélérateur de vulcanisation.

De manière préférentielle, l'invention est relative à une composition telle que définie ci-dessus ne contenant pas d'agent antioxydant.

De préférence également, l'invention est relative à une composition telle que définie ci-dessus comprenant en outre un plastifiant, de préférence choisi parmi les résines plastifiantes, les huiles d'extension et leurs mélanges.

Dans la présente demande, l'expression « pce » (« phr » en anglais) signifie de manière connue parties en poids pour cent parties en poids d'élastomère. On exprime ainsi la quantité en poids des constituants des compositions par rapport à la quantité totale d'élastomères en poids considérée par convention à la valeur cent.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Selon un mode de réalisation préféré de l'invention, les extrémités desdites au moins deux couches de sommet de travail étant séparées par une couche Q de mélange élastomérique, au moins une partie de la couche Q de mélange élastomérique forme au moins une partie desdits au moins 30 % des mélanges élastomériques présents dans la surface de ladite au moins une zone S dans lesquels la densité relative de ponts de soufre mesurée selon la méthode de gonflement à l'équilibre est inférieure à 5 %.

De préférence encore selon l'invention, lesdites au moins deux couches de sommet de travail étant chacune formée d'éléments de renforcement insérés entre deux couches de calandrage de mélange élastomérique au moins une partie des couches de calandrage desdites au moins deux couches de sommet de travail forme au moins une partie desdits au moins 30 % des mélanges élastomériques présents dans la surface de ladite au moins une zone S dans lesquels la densité relative de ponts de soufre mesurée selon la méthode de gonflement à l'équilibre est inférieure à 5 %.

Avantageusement encore, au moins une couche P de mélange polymérique étant au contact d'au moins une couche de sommet de travail et au contact de l'armature de carcasse, ladite au moins une couche P de mélange polymérique s'étendant axialement jusqu'au moins l'extrémité axiale de la bande de roulement, au moins une partie de ladite au moins une couche P de mélange élastomérique forme au moins une partie desdits au moins 30 % des mélanges élastomériques présents dans la surface de ladite au moins une zone S dans lesquels la densité relative de ponts de soufre mesurée selon la méthode de gonflement à l'équilibre est inférieure à 5 %.

Selon l'invention, le pneumatique comporte avantageusement deux couches P, et plus exactement une dans chacune des épaules, disposées l'une par rapport à l'autre de manière symétrique par rapport au plan équatorial. Selon certaines variantes de réalisation, une couche P se prolonge jusqu'au plan équatorial, les deux couches P ne formant plus alors qu'une seule et même couche continue d'une épaule à l'autre du pneumatique.

Selon un mode de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres modes de réalisation de l'invention, l'armature de sommet comporte encore au moins une couche d'éléments de renforcement circonférentiels.

Une réalisation de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

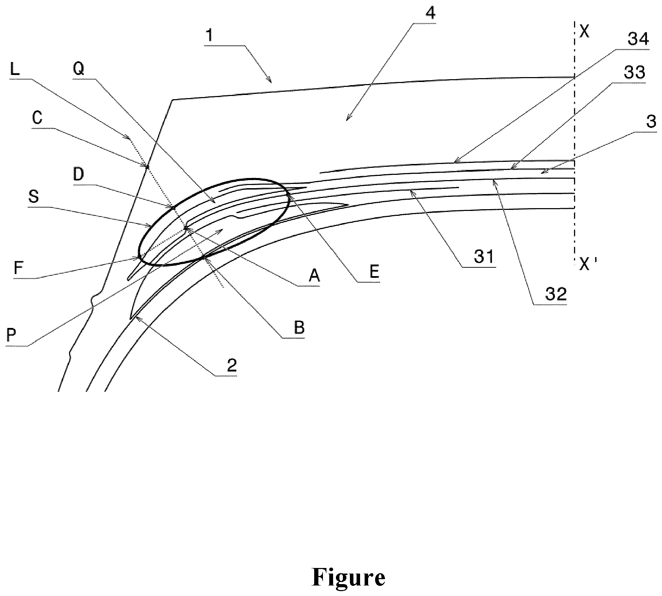

D'autres détails et caractéristiques avantageux de l'invention ressortiront ci-après de la description d'exemples de réalisation de l'invention en référence à la figure qui représente une vue méridienne d'un schéma partiel d'un pneumatique selon l'invention.

La figure n'est pas représentée à l'échelle pour en simplifier la compréhension. La figure ne représente qu'une demi-vue d'un pneumatique qui se prolonge de manière symétrique par rapport à l'axe XX' qui représente le plan médian circonférentiel, ou plan équatorial, d'un pneumatique.

Sur la figure, le pneumatique 1, de dimension 295/80 R 22.5, comprend une armature de carcasse radiale 2 ancrée dans deux bourrelets, autour de tringles. L'armature de carcasse 2 est formée d'une seule couche de câbles métalliques. L'armature de carcasse 2 est frettée par une armature de sommet 3, elle-même coiffée d'une bande de roulement 4.

Les zones basses et bourrelets du pneumatique 1 ne sont notamment pas représentés sur la figure.

Sur la figure, l'armature de sommet 3 est formée radialement de l'intérieur à l'extérieur :
- d'une couche de triangulation 31 formée de câbles métalliques inextensibles 9.28 non frettés, orientés d'un angle égal à 65°,
- d'une première couche de travail 32 formée de câbles métalliques inextensibles 11.35 non frettés, continus sur toute la largeur de la nappe, orientés d'un angle égal à 26°,
- d'une seconde couche de travail 33 formée de câbles métalliques inextensibles 11.35 non frettés, continus sur toute la largeur de la nappe, orientés d'un angle égal à 18° et croisés avec les câbles métalliques de la première couche de travail,
- d'une couche de protection 34 formée de câbles métalliques élastiques 6.35 non frettés, continus sur toute la largeur de la nappe, orientés d'un angle égal à 18° dans le même sens que les câbles métalliques de la couche de travail 33.

Une zone S est définie conformément à l'invention par la spline cubique continue en courbure passant par les points B, D, E et F dans le plan méridien de la figure.

Le point B est défini par la projection orthogonale sur un élément de renforcement de l'armature de carcasse du point A formant l'extrémité d'un élément de renforcement de la couche de sommet de travail 32 axialement la plus large.

Le point D est tel que le segment AD soit égale à 1/3 du segment AC ; le point C est l'intersection de la surface extérieure de la bande de roulement 4 et de la droite L passant par les points A et B, D étant portée par la droite passant par les points A, B et C.

Le point E est défini sur un élément de renforcement de la couche de sommet de travail axialement la plus large tel que la longueur du segment AE soit égale à 10% de la largeur axiale maximale du pneumatique, celui-ci étant monté sur sa jante de service et gonflé à sa pression nominale.

Le point F, axialement extérieur au point A, est tel que le segment AF est perpendiculaire à la droite passant par les points A, B, C et D et tel que sa longueur est égale à la moitié de celle du segment AE.

Une couche de mélange caoutchouteux Q vient découpler les extrémités des couches de sommet de travail 32 et 33.

Selon l'invention, une couche P de mélange caoutchouteux est mise en place entre l'armature de carcasse 2 et la première couche de travail 32.

Différents pneumatiques ont été réalisés conformément à l'invention avec un pourcentage de la zone S comportant une densité relative de ponts de soufre mesurée selon la méthode de gonflement à l'équilibre inférieure à 5 % variant entre 30 % et 60 %.

La composition utilisée pour permettre d'obtenir une densité relative de ponts de soufre mesurée selon la méthode de gonflement à l'équilibre inférieure à 5 % est la suivante :

| | |
|---|---|
| NR (1) | 100 |
| Dérivé ZDA (2) | 20 |
| Peroxyde (3) | 1,5 |
| Peroxyde/dérivé ZDA | 0,075 |
| Charge (4) | 40 |
| Charge/dérivé ZDA | 2 |
| ZnO (5) | 6 |

| | |
|---|---|
| (1) Caoutchouc naturel (2) Diméthacrylate de zinc (ZDMA) « DIMALINK 634 » de la société CRAY VALLEY (3) Peroxyde de dicumyl « Dicup » de la société Hercules (4) Noir de carbone grade ASTM N326 (société Cabot) (5) Oxyde de zinc (grade industriel - société Umicore) | |

La composition décrite ci-dessus conduit à une densité relative de ponts ioniques de l'ordre de 80 % et une densité relative de ponts carbone/carbone de l'ordre de 20 %.

Il s'avère que les cinématiques de cuisson des mélanges caoutchouteux présentant une densité relative de ponts de soufre mesurée selon la méthode de gonflement à l'équilibre inférieure à 5 % sont différentes des mélanges plus usuels dans la fabrication des pneumatiques. Pour faciliter la cuisson des différents mélanges, les inventeurs ont appliqué des méthodes voisines de celles des opérations de rechapage pour permettre une cuisson de la bande de roulement indépendante de la cuisson des autres mélanges. La cuisson des différentes zones du pneumatique peut ainsi être maîtrisée.

Un premier pneumatique P1 selon l'invention comporte une couche Q, au moins la partie des calandrages des couches de travail présentes dans la surface de la zone S et une partie de de la couche P présente dans la surface de la zone S dont les mélanges caoutchouteux sont réalisés avec la composition décrite ci-dessus. La surface occupée par ces mélanges représente 35 % de la surface de la zone S.

Un deuxième pneumatique P2 selon l'invention comporte une couche Q, au moins la partie des calandrages des couches de travail présentes dans la surface de la zone S et la totalité de la partie de de la couche P présente dans la surface de la zone S dont les mélanges caoutchouteux sont réalisés avec la composition décrite ci-dessus. La surface occupée par ces mélanges représente 55 % de la surface de la zone S.

Un pneumatique P3, non conforme à l'invention, comporte uniquement une couche Q dont les mélanges caoutchouteux sont réalisés avec la composition décrite ci-dessus. La surface occupée par la couche Q représente 20 % de la surface de la zone S.

Un pneumatique de référence est réalisé, celui-ci ne comportant aucun mélange caoutchouteux dans la zone S présentant une densité relative de ponts de soufre mesurée selon la méthode de gonflement à l'équilibre inférieure à 5 %

Des roulages ont été effectués avec ces quatre pneumatiques pour évaluer leurs performances en termes d'endurance.

Ces essais d'endurance ont été réalisés sur une machine de test, à volant intérieur de développement de 40 mètres, imposant à chacun des pneumatiques un roulage ligne droite à une vitesse égale à l'indice de vitesse maximum prescrit pour ledit pneumatique (speed index) sous une charge initiale correspondant à la charge prescrite par l'ERTO et progressivement augmentée, le pneumatique étant maintenue à une pression régulée 20 % supérieure à celle préconisée par l'ETRTO.

Le kilométrage parcouru est mesuré jusqu'à ce que le pneumatique présente une dégradation de son sommet. Les mesures illustrées ci-dessous sont ramenées à une base 100 pour le pneumatique de référence.

| | R | P1 | P2 | P3 |
|---|---|---|---|---|
| Km | 100 | 125 | 140 | 100 |

Ces résultats confirment les gains en endurance obtenus avec des mélanges élastomériques définis et localisés conformément à l'invention dans les zones des épaules du pneumatique.

## Revendications

1. Pneumatique (1) à armature de carcasse radiale (2), constituée d'au moins une couche d'éléments de renforcement, ledit pneumatique comprenant une armature de sommet (3) comportant au moins deux couches de sommet de travail (32, 33) d'éléments de renforcement, elle-même coiffée radialement d'une bande de roulement (4), ladite bande de roulement (4) étant réunie à deux bourrelets par l'intermédiaire de deux flancs, **caractérisé en ce que** la densité relative de ponts de soufre mesurée selon la méthode de gonflement à l'équilibre est inférieure à 5 % dans au moins 30 % des mélanges élastomériques présents dans la surface d'au moins une zone (S) dans un plan méridien et **en ce que** ladite au moins une zone (S) est définie dans un plan méridien par la spline cubique continue en courbure passant par quatre points tels que :
- un premier point B, défini par la projection orthogonale sur un élément de renforcement de l'armature de carcasse (2) du point A formant l'extrémité d'un élément de renforcement de la couche de sommet de travail (32) axialement la plus large,
- un deuxième point D, tel que le segment AD soit égale à 1/3 du segment AC, le point C étant l'intersection de la surface extérieure de la bande de roulement et de la droite passant par les points A et B, D étant portée par la droite passant par les points A, B et C,
- un troisième point E défini sur un élément de renforcement de la couche de sommet de travail (32) axialement la plus large tel que la longueur du segment AE soit égale à 10% de la largeur la largeur axiale maximale du pneumatique et,
- un quatrième point F, axialement extérieur au point A, tel que le segment AF soit perpendiculaire à la droite passant par les points A, B, C et D et dont la longueur est égale à la moitié de celle du segment AE, et
**en ce que** lesdits mélanges élastomériques présents dans la surface de ladite au moins une zone (S) dans un plan méridien sont des compositions à base d'au moins un élastomère diénique choisi dans le groupe des élastomères diéniques constitué par les polybutadiènes (en abrégé "BR"), les polyisoprènes (IR) de synthèse, le caoutchouc naturel (NR), les copolymères d'isoprène, les copolymères de butadiène à l'exception des copolymères butadiène-nitrile (NBR), à l'exclusion des élastomères diéniques portant des fonctions carboxyles, et les mélanges de ces élastomères diéniques.

2. Pneumatique (1) selon la revendication 1, **caractérisé en ce que** la densité relative de ponts de soufre mesurée selon la méthode de gonflement à l'équilibre est inférieure à 5 % dans au moins 50 % des mélanges élastomériques présents dans la surface de ladite au moins une zone (S) dans un plan méridien.

3. Pneumatique (1) selon la revendication 1 ou 2, **caractérisé en ce que** lesdits mélanges élastomériques présents dans la surface de ladite au moins une zone (S) dans un plan méridien sont des compositions à base d'au moins un élastomère diénique, un dérivé du diacrylate de zinc sous la forme d'un sel de zinc de formule (I) 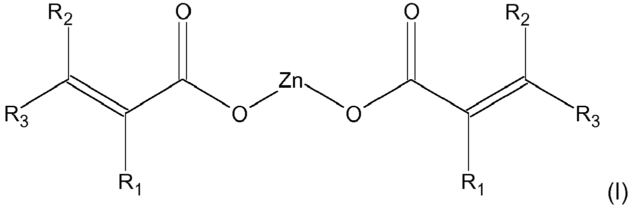 dans laquelle R1, R2 et R3 représentent indépendamment un atome d'hydrogène ou un groupe hydrocarboné en C1-C7 choisi parmi les groupes alkyles linéaires, ramifiés ou cycliques, les groupes aralkyles, les groupes alkylaryles et les groupes aryles, et éventuellement interrompus par un ou plusieurs hétéroatomes, R2 et R3 pouvant former ensemble un cycle non aromatique, lesdites compositions comprenant en outre un peroxyde, les taux de dérivé de diacrylate de zinc et de peroxyde étant tels que le rapport du taux de peroxyde et du taux de dérivé de diacrylate de zinc est inférieur ou égal à 0,09.

4. Pneumatique (1) selon la revendication 3, **caractérisé en ce que** le peroxyde est un peroxyde organique, préférentiellement présent dans une quantité inférieure ou égale à 3 pce.

5. Pneumatique (1) selon l'une des revendications 3 ou 4, **caractérisé en ce que** le rapport du taux de peroxyde et du taux de dérivé de diacrylate de zinc est compris entre 0,01 et 0,09.

6. Pneumatique (1) selon l'une des revendications précédentes, **caractérisé en ce que** le point (A) formant l'extrémité d'un élément de renforcement de la couche de sommet de travail (32) axialement la plus large dans un plan méridien est au contact ou inclus dans lesdits au moins 30 % des mélanges élastomériques présents dans la surface de ladite au moins une zone (S).

7. Pneumatique selon l'une des revendications précédentes, **caractérisé en ce que** les extrémités de chacune des couches de sommet de travail dans un plan méridien sont au contact ou incluses dans lesdits au moins 30 % des mélanges élastomériques présents dans la surface de ladite au moins une zone (S).

8. Pneumatique (1) selon l'une des revendications précédentes, **caractérisé en ce que** la densité relative de ponts ioniques mesurée selon la méthode de gonflement à l'équilibre est supérieure à 50 % dans lesdits au moins 30 % des mélanges élastomériques présents dans la surface de ladite au moins une zone (S) dans un plan méridien et de préférence dans lesdits au moins 50 % des mélanges élastomériques présents dans la surface de ladite au moins une zone (S) dans un plan méridien.

9. Pneumatique (1) selon l'une des revendications précédentes, **caractérisé en ce que** la densité relative de ponts carbone-carbone mesurée selon la méthode de gonflement à l'équilibre est inférieure à 45 % dans lesdits au moins 30 % des mélanges élastomériques présents dans la surface de ladite au moins une zone (S) dans un plan méridien et de préférence dans lesdits au moins 50 % des mélanges élastomériques présents dans la surface de ladite au moins une zone (S) dans un plan méridien.

10. Pneumatique (1) selon l'une des revendications précédentes, les extrémités desdites au moins deux couches de sommet de travail (32, 33) sont séparées par une couche (Q) de mélange élastomérique, **caractérisé en ce que** au moins une partie de la couche (Q) de mélange élastomérique forme au moins une partie desdits au moins 30 % des mélanges élastomériques présents dans la surface de ladite au moins une zone (S).

11. Pneumatique (1) selon l'une des revendications précédentes, lesdites au moins deux couches de sommet de travail (32, 33) étant chacune formée d'éléments de renforcement insérés entre deux couches de calandrage de mélange élastomérique, **caractérisé en ce que** au moins une partie des couches de calandrage desdites au moins deux couches de sommet de travail forme au moins une partie desdits au moins 30 % des mélanges élastomériques présents dans la surface de ladite au moins une zone (S).

12. Pneumatique (1) selon l'une des revendications précédentes, au moins une couche (P) de mélange polymérique étant au contact d'au moins une couche de sommet de travail (32) et au contact de l'armature de carcasse (2), ladite au moins une couche (P) de mélange polymérique s'étendant axialement jusqu'au moins l'extrémité axiale de la bande de roulement (4), **caractérisé en ce que** au moins une partie de ladite au moins une couche (P) de mélange élastomérique forme au moins une partie desdits au moins 30 % des mélanges élastomériques présents dans la surface de ladite au moins une zone (S).

13. Pneumatique (1) selon l'une des revendications précédentes, **caractérisé en ce que** l'armature de sommet (3) du pneumatique est formée d'au moins deux couches de sommet de travail (32, 33) d'éléments de renforcement inextensibles, croisés d'une couche à l'autre en faisant avec la direction circonférentielle des angles compris entre 10° et 45°.

14. Pneumatique (1) selon l'une des revendications précédentes, **caractérisé en ce que** l'armature de sommet (3) comporte encore au moins une couche d'éléments de renforcement circonférentiels

15. Pneumatique (1) selon l'une des revendications précédentes, **caractérisé en ce que** l'armature de sommet (3) est complétée radialement à l'extérieur par au moins une nappe supplémentaire (34), dite de protection, d'éléments de renforcement dits élastiques, orientés par rapport à la direction circonférentielle avec un angle compris entre 10° et 45° et de même sens que l'angle formé par les éléments inextensibles de la nappe de travail qui lui est radialement adjacente.

## Patentansprüche

1. Reifen (1) mit radialer Karkassenverstärkung (2), die aus mindestens einer Schicht aus Verstärkungselementen gebildet ist, wobei der Reifen eine Oberteilverstärkung (3) umfasst, die mindestens zwei Oberteilarbeitsschichten (32, 33) aus Verstärkungselementen aufweist und selbst radial von einer Lauffläche (4) bedeckt ist, wobei die Lauffläche (4) über zwei Seitenwände mit zwei Wülsten verbunden ist, **dadurch gekennzeichnet, dass** die relative Dichte von Schwefelbrücken, bestimmt nach dem Gleichgewichtsquellungsverfahren, in mindestens 30% der Elastomermischungen, die in der Fläche von mindestens einer Zone (S) in einer Meridionalebene vorhanden sind, unter 5% beträgt, und dadurch, dass die mindestens eine Zone (S) in einer Meridionalebene durch den kontinuierlichen kubischen Spline mit einer Krümmung definiert ist, der durch vier Punkte verläuft, und zwar:
- einen ersten Punkt B, der durch die orthogonale Projektion des Punkts A, der das Ende eines Verstärkungselements der axial breitesten Oberteilarbeitsschicht (32) bildet, auf ein Verstärkungselement der Karkassenverstärkung (2) definiert ist,
- einen zweiten Punkt D, der derart ist, dass das Segment AD 1/3 des Segments AC entspricht, wobei der Punkt C der Schnittpunkt der Außenfläche der Lauffläche und der Gerade ist, die durch die Punkte A und B verläuft, wobei sich D auf der Geraden befindet, die durch die Punkte A, B und C verläuft,
- einen dritten Punkt E, der auf einem Verstärkungselement der axial breitesten Oberteilarbeitsschicht (32) derart definiert ist, dass die Länge des Segments AE 10% der Breite der maximalen axialen Breite des Reifens entspricht, und
- einen vierten Punkt F, axial außerhalb von Punkt A, sodass das Segment AF lotrecht zu der Geraden verläuft, die durch die Punkte A, B, C und D verläuft, und seine Länge der Hälfte von der des Segments AE entspricht, und
dadurch, dass die Elastomermischungen, die in der Fläche der mindestens einen Zone (S) in einer Meridionalebene vorhanden sind, Zusammensetzungen auf Basis von mindestens einem Dienelastomer sind, das aus der Gruppe der Dienelastomere ausgewählt ist, die gebildet wird von Polybutadienen (abgekürzt "BR"), synthetischen Polyisoprenen (IR), Naturkautschuk (NR), Isopren-Copolymeren, Butadien-Copolymeren mit Ausnahme von Nitril-Butadien-Copolymeren (NBR), unter Ausschluss von Dienelastomeren mit Carboxylgruppen, und Mischungen aus diesen Dienelastomeren.

2. Reifen (1) nach Anspruch 1, **dadurch gekennzeichnet, dass** die relative Dichte von Schwefelbrücken, bestimmt nach dem Gleichgewichtsquellungsverfahren, in mindestens 50% der Elastomermischungen, die in der Fläche der mindestens einen Zone (S) in einer Meridionalebene vorhanden sind, unter 5% beträgt.

3. Reifen (1) nach Anspruch 1 oder 2, **dadurch gekennzeichnet, dass** die Elastomermischungen, die in der Fläche der mindestens einen Zone (S) in einer Meridionalebene vorhanden sind, Zusammensetzungen auf Basis von mindestens einem Dienelastomer sind, einem Zinkdiacrylat-Derivat in Form eines Zinksalzes mit der Formel (I) 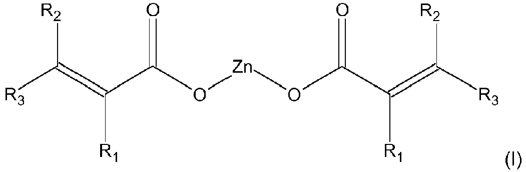 wobei R1, R2 und R3 unabhängig ein Wasserstoffatom oder eine Kohlenwasserstoffgruppe mit C1 bis C7 darstellen, die ausgewählt ist aus linearen, verzweigten oder cyclischen Alkylgruppen, aus Aralkylgruppen, Alkylarylgruppen und Arylgruppen, und gegebenenfalls unterbrochen von einem oder mehreren Heteroatomen, wobei R2 und R3 gemeinsam einen nicht aromatischen Ring bilden können, wobei die Zusammensetzungen ferner ein Peroxid umfassen, wobei der Gehalt an Zinkdiacrylat-Derivat und Peroxid derart ist, dass das Verhältnis des Gehalts an Peroxid und des Gehalts an Zinkdiacrylat-Derivat kleiner gleich 0,09 ist.

4. Reifen (1) nach Anspruch 3, **dadurch gekennzeichnet, dass** das Peroxid ein organisches Peroxid ist, das vorzugsweise in einer Menge von kleiner gleich 3 phr vorliegt.

5. Reifen (1) nach Anspruch 3 oder 4, **dadurch gekennzeichnet, dass** das Verhältnis des Gehalts an Peroxid und des Gehalts an Zinkdiacrylat-Derivat zwischen 0,01 und 0,09 liegt.

6. Reifen (1) nach einem der vorhergehenden Ansprüche, **dadurch gekennzeichnet, dass** der Punkt (A), der das Ende eines Verstärkungselements der axial breitesten Oberteilarbeitsschicht (32) in einer Meridionalebene bildet, die mindestens 30% der Elastomermischungen, die in der Fläche der mindestens einen Zone (S) vorhanden sind, berührt oder darin enthalten ist.

7. Reifen nach einem der vorhergehenden Ansprüche, **dadurch gekennzeichnet, dass** die Enden von jeder der Oberteilarbeitsschichten in einer Meridionalebene die mindestens 30% der Elastomermischungen, die in der Fläche der mindestens einen Zone (S) vorhanden sind, berühren oder darin enthalten sind.

8. Reifen (1) nach einem der vorhergehenden Ansprüche, **dadurch gekennzeichnet, dass** die relative Dichte von Ionenbrücken, bestimmt nach dem Gleichgewichtsquellungsverfahren, in den mindestens 30% der Elastomermischungen, die in der Fläche der mindestens einen Zone (S) in einer Meridionalebene vorhanden sind, und vorzugsweise in den mindestens 50% der Elastomermischungen, die in der Fläche der mindestens einen Zone (S) in einer Meridionalebene vorhanden sind, über 50% beträgt.

9. Reifen (1) nach einem der vorhergehenden Ansprüche, **dadurch gekennzeichnet, dass** die relative Dichte von Kohlenstoff-Kohlenstoff-Brücken, bestimmt nach dem Gleichgewichtsquellungsverfahren, in den mindestens 30% der Elastomermischungen, die in der Fläche der mindestens einen Zone (S) in einer Meridionalebene vorhanden sind, und vorzugsweise in den mindestens 50% der Elastomermischungen, die in der Fläche der mindestens einen Zone (S) in einer Meridionalebene vorhanden sind, unter 45% beträgt.

10. Reifen (1) nach einem der vorhergehenden Ansprüche, wobei die Enden der mindestens zwei Oberteilarbeitsschichten (32, 33) durch eine Elastomermischung-Schicht (Q) getrennt sind, **dadurch gekennzeichnet, dass** mindestens ein Abschnitt der Elastomermischung-Schicht (Q) mindestens einen Abschnitt der mindestens 30% der Elastomermischungen, die in der Fläche der mindestens einen Zone (S) vorhanden sind, bildet.

11. Reifen (1) nach einem der vorhergehenden Ansprüche, wobei die mindestens zwei Oberteilarbeitsschichten (32, 33) jeweils aus Verstärkungselementen gebildet sind, die zwischen zwei Elastomermischung-Zwischenschichten eingesetzt sind, **dadurch gekennzeichnet, dass** mindestens ein Abschnitt der Zwischenschichten der mindestens zwei Oberteilarbeitsschichten mindestens einen Abschnitt der mindestens 30% der Elastomermischungen, die in der Fläche der mindestens einen Zone (S) vorhanden sind, bildet.

12. Reifen (1) nach einem der vorhergehenden Ansprüche, wobei mindestens eine Polymermischung-Schicht (P) mindestens eine Oberteilarbeitsschicht (32) und die Karkassenverstärkung (2) berührt, wobei die mindestens eine Polymergemisch-Schicht (P) axial bis zu mindestens dem axialen Ende der Lauffläche (4) verläuft, **dadurch gekennzeichnet, dass** mindestens ein Abschnitt der mindestens einen Elastomermischung-Schicht (P) mindestens einen Abschnitt der mindestens 30% der Elastomermischungen, die in der Fläche der mindestens einen Zone (S) vorhanden sind, bildet.

13. Reifen (1) nach einem der vorhergehenden Ansprüche, **dadurch gekennzeichnet, dass** die Oberteilverstärkung (3) des Reifens aus mindestens zwei Oberteilarbeitsschichten (32, 33) aus nicht dehnbaren Verstärkungselementen gebildet ist, die von einer Schicht zur nächsten gekreuzt sind und dabei einen Winkel zur Umfangsrichtung zwischen 10° und 45° bilden.

14. Reifen (1) nach einem der vorhergehenden Ansprüche, **dadurch gekennzeichnet, dass** die Oberteilverstärkung (3) ferner mindestens eine Schicht aus Umfangsverstärkungselementen aufweist.

15. Reifen (1) nach einem der vorhergehenden Ansprüche, **dadurch gekennzeichnet, dass** die Oberteilverstärkung (3) radial außen durch mindestens eine zusätzliche als Schutzlage (34) bezeichnete Lage aus als elastisch bezeichneten Verstärkungselementen vervollständigt ist, die zur Umfangsrichtung unter einem Winkel zwischen 10° und 45° und in derselben Richtung wie der Winkel ausgerichtet sind, den die nicht dehnbaren Elemente der Arbeitslage bilden, die radial daran angrenzt.

## Claims

1. Tyre (1) having a radial carcass reinforcement (2), consisting of at least one layer of reinforcing elements, said tyre comprising a crown reinforcement (3) containing at least two working crown layers (32, 33) of reinforcing elements, which is itself covered radially with a tread (4), said tread (4) being joined to two beads via two sidewalls, **characterized in that** the relative density of sulfur bridges measured according to the equilibrium swelling method is less than 5% in at least 30% of the elastomer compounds present in the surface of at least one zone (S) in a meridian plane and **in that** said at least one zone (S) is defined in a meridian plane by the continuous cubic spline with a curvature that passes through four points such as:
- a first point B, defined by the orthogonal projection onto a reinforcing element of the carcass reinforcement (2) of the point A forming the end of a reinforcing element of the axially widest working crown layer (32),
- a second point D, such that the segment AD is equal to 1/3 of the segment AC, the point C being the intersection of the outer surface of the tread and of the straight line passing through the points A and B, D being borne by the straight line passing through the points A, B and C,
- a third point E defined on a reinforcing element of the axially widest working crown layer (32) such that the length of the segment AE is equal to 10% of the maximum axial width of the tyre, and
- a fourth point F, axially outside of the point A, such that the segment AF is perpendicular to the straight line passing through the points A, B, C and D and the length of which is equal to half of that of the segment AE, and
**in that** said elastomer compounds present in the surface of said at least one zone (S) in a meridian plane are compositions based on at least one diene elastomer selected from the group of diene elastomers consisting of polybutadienes (abbreviated to "BRs"), synthetic polyisoprenes (IRs), natural rubber (NR), isoprene copolymers, butadiene copolymers with the exception of butadiene-nitrile copolymers (NBRs), apart from diene elastomers bearing carboxyl functions, and mixtures of these diene elastomers.

2. Tyre (1) according to Claim 1, **characterized in that** the relative density of sulfur bridges measured according to the equilibrium swelling method is less than 5% in at least 50% of the elastomer compounds present in the surface of said at least one zone (S) in a meridian plane.

3. Tyre (1) according to Claim 1 or 2, **characterized in that** said elastomer compounds present in the surface of said at least one zone (S) in a meridian plane are compositions based on at least one diene elastomer, a zinc diacrylate derivative in the form of a zinc salt of formula (I) 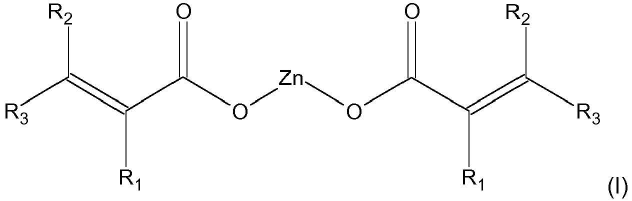 in which R1, R2 and R3 independently represent a hydrogen atom or a C1-C7 hydrocarbon-based group selected from linear, branched or cyclic alkyl groups, aralkyl groups, alkylaryl groups and aryl groups and optionally interrupted by one or more heteroatoms, it being possible for R2 and R3 to together form a nonaromatic ring, said compositions additionally comprising a peroxide, the zinc diacrylate derivative and peroxide contents being such that the ratio of the peroxide content to the zinc diacrylate derivative content is less than or equal to 0.09.

4. Tyre (1) according to Claim 3, **characterized in that** the peroxide is an organic peroxide, preferentially present in an amount of less than or equal to 3 phr.

5. Tyre (1) according to either of Claims 3 and 4, **characterized in that** the ratio of the peroxide content to the zinc diacrylate derivative content is between 0.01 and 0.09.

6. Tyre (1) according to one of the preceding claims, **characterized in that** the point (A) forming the end of a reinforcing element of the axially widest working crown layer (32) in a meridian plane is in contact with or included in said at least 30% of the elastomer compounds present in the surface of said at least one zone (S).

7. Tyre (1) according to one of the preceding claims, **characterized in that** the ends of each of the working crown layers in a meridian plane are in contact with or included in said at least 30% of the elastomer compounds present in the surface of said at least one zone (S).

8. Tyre (1) according to one of the preceding claims, **characterized in that** the relative density of ionic bridges measured according to the equilibrium swelling method is greater than 50% in said at least 30% of the elastomer compounds present in the surface of said at least one zone (S) in a meridian plane and preferably in said at least 50% of the elastomer compounds present in the surface of said at least one zone (S) in a meridian plane.

9. Tyre (1) according to one of the preceding claims, **characterized in that** the relative density of carbon-carbon bridges measured according to the equilibrium swelling method is less than 45% in said at least 30% of the elastomer compounds present in the surface of said at least one zone (S) in a meridian plane and preferably in said at least 50% of the elastomer compounds present in the surface of said at least one zone (S) in a meridian plane.

10. Tyre (1) according to one of the preceding claims, the ends of said at least two working crown layers (32, 33) are separated by a layer (Q) of elastomer compound, **characterized in that** at least one portion of the layer (Q) of elastomer compound forms at least one portion of said at least 30% of the elastomer compounds present in the surface of said at least one zone (S).

11. Tyre (1) according to one of the preceding claims, said at least two working crown layers (32, 33) being each formed of reinforcing elements inserted between two elastomer compound calendering layers, **characterized in that** at least one portion of the calendering layers of said at least two working crown layers forms at least one portion of said at least 30% of the elastomer compounds present in the surface of said at least one zone (S).

12. Tyre (1) according to one of the preceding claims, at least one layer (P) of polymer compound being in contact with at least one working crown layer (32) and in contact with the carcass reinforcement (2), said at least one layer (P) of polymer compound extending axially up to at least the axial end of the tread (4), **characterized in that** at least one portion of said at least one layer (P) of elastomer compound forms at least one portion of said at least 30% of the elastomer compounds present in the surface of said at least one zone (S).

13. Tyre (1) according to one of the preceding claims, **characterized in that** the crown reinforcement (3) of the tyre is formed of at least two working crown layers (32, 33) of inextensible reinforcing elements that are crossed from one layer to the other, forming angles of between 10° and 45° with the circumferential direction.

14. Tyre (1) according to one of the preceding claims, **characterized in that** the crown reinforcement (3) also comprises at least one layer of circumferential reinforcing elements.

15. Tyre (1) according to one of the preceding claims, **characterized in that** the crown reinforcement (3) is supplemented radially on the outside by at least one additional ply (34), referred to as a protective ply, of reinforcing elements, referred to as elastic reinforcing elements, that are oriented with respect to the circumferential direction at an angle of between 10° and 45° and in the same direction as the angle formed by the inextensible elements of the working ply which is radially adjacent thereto.
